# EUROPÄISCHE PATENTSCHRIFT

(11) **EP 0 645 417 B1**
(45) Veröffentlichungstag und Bekanntmachung des Hinweises auf die Patenterteilung: **06.06.2007**
(21) Anmeldenummer: 94114858.7
(22) Anmeldetag: 21.09.1994
(51) Int. Cl.: C08J 5/18, C08L 23/10, B32B 27/32

(54) **Biaxial orientierte Polypropylenfolie mit verbesserten Eigenschaften hinsichtlich Mechanik und Barriere**
Biaxially oriented film of polypropylene with improved mechanical and barrier properties
Feuille en polypropylène étirée biaxialement ayant des propriétés de barrière et méchanique améliorées

(30) Priorität: 27.09.1993 DE 4332834; 02.11.1993 DE 4337251
(43) Veröffentlichungstag der Anmeldung: 29.03.1995
(73) Patentinhaber: Treofan Germany GmbH & Co.KG, 66539 Neunkirchen (DE)
(72) Erfinder: Peiffer, Herbert, Dr., D-55126 Mainz (DE); Murschall, Ursula, Dr., D-55283 Nierstein (DE); Dries, Thomas, Dr., D-55270 Schwabenheim (DE); Schlögl, Gunter, Dr., D-65779 Kelkheim (DE)

(56) Entgegenhaltungen:
- EP-A- 0 079 520
- EP-A- 0 195 505
- EP-A- 0 468 333
- EP-A- 0 614 756
- EP-A- 0 634 455
- DE-A- 3 401 218
- DE-A- 4 128 820
- US-A- 3 937 762
- RÖMPP: "CHEMIE LEXIKON, 10. AUFLAGE" * Seite 2202 - Seite 2203 * * Seite 1104 - Seite 1105 * * Seite 4449 *
- "ASTM STANDARD D 883-95a"

## Beschreibung

Die Erfindung betrifft eine Polypropylenfolie mit verbesserten Barriereeigenschaften hinsichtlich Durchtritt von Wasserdampf und Sauerstoff und verbesserten mechanischen Eigenschaften.

Die Verbesserung der mechanischen Eigenschaften von Folien, insbesondere von Folien für den Verpackungssektor, hat in letzter Zeit an Bedeutung zugenommen. Aus Kosten- und aus Umweltgründen wünscht die Verpackungsindustrie immer dünnere Folien bei gleichbleibender Maschinengängigkeit und gleichbleibenden bzw. verbesserten Barriereeigenschaften, insbesondere hinsichtlich Durchtritt von Wasserdampf und Sauerstoff.

Dünnere Folien haben jedoch eine überproportional schlechtere Steifigkeit in Maschinenrichtung und damit ein wesentlich schlechteres Maschinenlaufverhalten, insbesondere auf den heutigen schnellaufenden Einschlagsmaschinen. Daneben verringern sich mit der Reduzierung der Foliendicke die Barriereeigenschaften ebenfalls überproportional. Infolge der schlechteren Barriereeigenschaften dünner Folien wird die Schutzwirkung der Folie gegenüber Verderben des Füllgutes stark eingeschränkt.

Die Steifigkeit (S) der Folie ist proportional dem Elastizitätsmodul (E) und der dritten Potenz der Dicke (d) [S = E·d³]. Daher hat man bei dünneren Folien nur die Möglichkeit, den Verlust an Steifigkeit über den Elastizitätsmodul der Folie zu kompensieren.

Die Erhöhung des Elastizitätsmoduls (E-Modul) in Maschinenrichtung ist seit jeher Gegenstand intensiver Bemühungen, weil diese mechanische Eigenschaft in unmittelbarem Zusammenhang mit der anwendungstechnischen Eignung steht und somit das Verarbeitungsverhalten direkt bestimmt.

Wie in den Produkt-Übersichten der Firmen Mobil Plastics Europe und Hoechst AG dargestellt liegt beispielsweise der Zug-E-Modul (DIN 53 457, ASTM 882) von üblichen boPP-Folien in Längsrichtung unabhängig von der Dicke zwischen 2 000 und 2 200 N/mm².

Die Barriere von boPP-Folien hinsichtlich Wasserdampf (WDD) und Sauerstoff (SDD) nimmt mit der Foliendicke ab. Im üblichen Dickenbereich von boPP-Folien (4 bis 100 µm) besteht z. B. zwischen der Wasserdampfbarriere (WDD) und der Dicke (d) näherungsweise ein hyperbolischer Zusammenhang (WDD · d = const.). Die Konstante hängt im wesentlichen von der Rohstoffzusammensetzung und den Streckbedingungen ab. Für boPP-Verpackungsfolien nach dem Stand der Technik hat die Konstante einen Wert von etwa: const. = 28 g·µm/m²·d. Die Wasserdampfdurchlässigkeit wurde hierbei nach DIN 53 122 gemessen. Aus den genannten Produkt-Übersichten geht hervor, daß beispielsweise die Wasserdampfdurchlässigkeit einer 25 µm dicken boPP-Folie bei 1,1 g/m²·d liegt.

Es ist bekannt, bei boPP-Folien den E-Modul in Maschinenrichtung entweder über die Verfahrenstechnik oder über Rohstoffmodifikationen oder die Kombination beider Möglichkeiten zu erhöhen.

Eine Möglichkeit zur Herstellung von hochfesten Polypropylenfolien ist ein drei- oder mehrstufiges Streckverfahren, wie es beispielsweise in der EP-B-0 116 457 beschrieben ist. Ein solches Herstellverfahren hat jedoch den Nachteil, daβ es eine zusätzliche Vorrichtung zur Nachlängsstreckung benötigt und dadurch sehr aufwendig ist. Darüber hinaus ist es gegen Störungen im Produktionsablauf, z. B. Folienabrisse, sehr anfällig.

Ferner weisen solche nachlängsgestreckten Folien einen gegenüber lediglich biaxial verstreckten Folien deutlich erhöhten Längsschrumpf auf, der es in der Regel verhindert, daβ die Folien eine thermische Trocknung, wie sie z. B. nach dem Aufbringen von Klebermassen zum Teil noch üblich ist, ohne unerwünschte Schrumpffalten überstehen.

Die Modifizierung der für die Herstellung von hochfesten Polypropylenfolien verwendeten Rohstoffe mit verschiedenen Kohlenwasserstoffharzen ist beispielsweise in der US-A-3,937,762 beschrieben. Eine solche Rohstoffmodifizierung ermöglicht die Herstellung von Polypropylenfolien, deren mechanische Festigkeit in Längsrichtung gegenüber Folien aus unmodifizierten Rohstoffen deutlich verbessert ist, die Werte nachlängsverstreckter Folien jedoch nicht erreicht, und deren Schrumpf in Längsrichtung ebenfalls relativ hoch ist.

In der EP-A-0 406 642 wird eine boPP-Folie mit hoher mechanischer Festigkeit beschrieben. Der hohe E-Modul in Längsrichtung wird dadurch erreicht, daß die Basisschicht 5 bis 30 Gew.-% eines Kohlenwasserstoffharzes und 0,01 bis 1,0 Gew.-% eines Nukleierungsmittels enthält. Über Barriereeigenschaften wird in dieser Schrift keine Ausage gemacht. In den Beispielen wird eine Harzkonzentration von 20 Gew.-% angegeben.

Derartig hohe Harzkonzentrationen führen zu Problemen bei der Folienherstellung. Insbesondere treten nach kurzer Zeit Ablagerungen an der Schnecke des Plastifizierextruders und an den Walzen der Längsstreckung auf. Daneben führt die Zugabe von Nukleierungsmittel in der angegebenen Konzentration zu optischen Foliendefekten in Form von sogenannten "Stippen" und "Blasen", die natürlich äußerst unerwünscht sind. Außerdem ist das Regenerat derartiger Folien aufgrund von Agglomeratneigung im Folienherstellprozeß nicht mehr einsetzbar. Weiterhin sind die in den Beispielen 3 bis 6 angegebenen Streckverhältnisse auf keiner Produktionsmaschine bei den üblichen Geschwindigkeiten mit dem dort beschriebenen Homopolymer zu realisieren. Es treten ständig Folienabrisse, insbesondere in der Querstreckung auf.

Hervorragende mechanische Eigenschaften lassen sich durch die Kombination eines Harzzusatzes zum eingesetzten Rohstoff mit einem Nachlängsstreckprozeß erzielen. Eine entsprechende Vorgehensweise ist in der EP-A-0 079 520 beschrieben; es werden Elastizitätsmodule in Längsrichtung von 4 000 bis 6 000 N/mm² erreicht. Allerdings hat auch dieses Verfahren den Nachteil, daβ ein aufwendiges und störanfälliges Nachlängsstreckverfahren erforderlich ist.

In der US-A-4,921,749 (= EP-A-0 247 898) wird eine siegelfähige boPP-Folie mit verbesserten mechanischen und optischen Eigenschaften beschrieben. Ebenfalls verbessert sind die Siegelbarkeit der Folie und die Durchlässigkeit für Wasserdampf und Sauerstoff. Sämtliche Verbesserungen resultieren aus der Zugabe eines niedrigmolekularen Harzes in die Basisschicht. Der Harzanteil beträgt dabei zwischen 3 und 30 Gew.-%. Das Harz hat ein Molekulargewicht deutlich kleiner als 5 000, bevorzugt kleiner als 1 000, und beträgt beispielsweise 600. Der Erweichungspunkt des Harzes liegt bei 120 bis 140 °C.

In der EP-A-0 468 333 wird eine siegelfähige Folie mit verbesserten Barriereeigenschaften hinsichtlich Durchtritt von Wasserdampf und Sauerstoff bei gleichzeitig guten Gleiteigenschaften und niedrigen Schrumpfwerten beschrieben. Die kennzeichnenden Merkmale dieser boPP-Folie sind darin zu sehen, daß sie aus einer Basisschicht aufgebaut ist, welche aus einem Polypropylen und einem Kohlenwasserstoffharz mit einem Erweichungspunkt von größer 140 °C besteht, und daß sie wenigstens eine siegelfähige Deckschicht aufweist, die gegebenenfalls zusätzlich ein Kohlenwasserstoffharz enthält. Die Basisschicht und die Deckschicht enthalten mindestens ein Antiblockmittel und/oder ein Gleitmittel.

In der US-A-4,921,749 und in der EP-A-0 468 333 werden hohe Konzentrationen an Kohlenwasserstoffharz eingesetzt, um die Barriereeigenschaften zu erhöhen. Derartig hohe Harzgehalte führen zu Problemen bei der Folienherstellung. Insbesondere treten nach kurzer Zeit Harzablagerungen an der Schnecke des Extruders und an den Längsstreckwalzen auf. Infolge der hohen Harzgehalte zeigen die Folien hohe Warmblockwerte und weisen eine störende Blockneigung bei der Weiterverarbeitung auf.

Die Aufgabe der vorliegenden Erfindung bestand darin, eine biaxial orientierte Polypropylenfolie zur Verfügung zu stellen, die sich durch einen hohen E-Modul in Maschinenrichtung und erhöhte Barriereeigenschaften hinsichtlich Durchtritt von Wasserdampf und Sauerstoff auszeichnet. Die Nachteile des Nachlängsstreckprozesses wie technische Umbauten an der Produktionsmaschine, Störungen durch häufige Folienabrisse und hoher Restschrumpf der boPP-Folien sollen vermieden werden. Weiterhin muß gewährleistet sein, daß das Regenerat in einer Konzentration von 20 bis 50 Gew.-%, bezogen auf das Gesamtgewicht der Folie, wieder zugeführt werden kann. Die Folie muß lauf- und verfahrenssicher bei Produktionsgeschwindigkeiten von bis zu 400 m/min herstellbar sein. Andere physikalische Folieneigenschaften, die im Hinblick auf deren Verwendung als Verpackungsfolie und/oder als Kaschierfolie gefordert sind, dürfen nicht nachteilig beeinflußt werden. Die Folie soll einen hohen Glanz, keine optischen Defekte in Form von Stippen oder Blasen, eine gute Kratzfestigkeit, bei einer niedrigen Foliendicke einen störungsfreien Lauf auf schnellaufenden Verpackungsmaschinen und im Falle transparenter Folientypen eine niedrige Folientrübung aufweisen.

Diese Aufgabe wird durch eine biaxial orientierte Polypropylenfolie gemäß den unabhängigen Ansprüchen 1 bis 4 gelöst. Die Unteransprüche geben bevorzugte Ausführungsformen der Erfindung an, welche nachstehend zusätzlich erläutert werden.

Erfindungsgemäß kann die Folie einschichtig sein und besteht dann nur aus der im folgenden beschriebenen Basisschicht. Die Basisschicht ist im Sinne der vorliegenden Erfindung diejenige Schicht, welche die größte Schichtdicke von allen vorhandenen Schichten aufweist. Im allgemeinen macht die Basisschicht mindestens 40 %, vorzugsweise 50 bis 98 %, der Gesamtfoliendicke aus. In einer bevorzugten Ausführungsform weist die Folie auf ihrer Basisschicht mindestens eine, gegebenenfalls beidseitig Deckschicht/en auf, welche die äußere Schicht der Folie bilden. In einer weiteren Ausführungsform weist die Folie auf ihrer Basisschicht mindestens eine, gegebenenfalls beidseitig Zwischenschicht/en auf.

Die Basisschicht der Folie enthält mindestens 85 Gew.-%, vorzugsweise 85 bis 99 Gew.-%, insbesondere 90 bis 95 Gew.-%, jeweils bezogen auf die Basisschicht, eines nachstehend beschriebenen Propylenhomopolymeren.

Dieses Propylenhomopolymer enthält im allgemeinen mindestens 90 Gew.-%, vorzugweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenhomopolymere.

Das Propylenhomopolymere der Basisschicht hat im allgemeinen einen Schmelzpunkt von 140 bis 165 °C, vorzugsweise von 155 bis 162 °C, und einen Schmelzflußindex (Messung DIN 53 735 bei 21,6 N Belastung und 230 °C) von 1,0 bis 10 g/10 min, vorzugsweise von 1,5 bis 6 g/10 min. Der n-heptanlösliche Anteil des Polymeren beträgt im allgemeinen 1 bis 10 Gew.-%, bezogen auf das Ausgangspolymere. Der n-heptanunlösliche Anteil des Propylenhomopolymeren ist hochisotaktisch. Der mittels ¹³C-NMR-Spektroskopie bestimmte Kettenisotaxie-Index des n-heptanunlöslichen Anteils beträgt mindestens 95 %, vorzugsweise 96 bis 99 %.

Die Molekulargewichtsverteilung des Propylenhomopolymeren kann je nach Anwendungsgebiet in breiten Grenzen variieren. Das Verhältnis des Gewichtsmittels M_{w} zum Zahlenmittel Mₙ liegt im allgemeinen zwischen 2 und 15.

In einer bevorzugten Ausführungsform der erfindungsgemäßen Folie liegt das Verhältnis des Gewichtsmittels M_{w} zum Zahlenmittel Mₙ bei 2 bis 6, ganz besonders bevorzugt bei 3,5 bis 5. Eine derartig enge Molekulargewichtsverteilung des Propylenhomopolymeren der Basisschicht erreicht man beispielsweise durch dessen peroxidischen Abbau.

Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt. $A = \frac{{MFI}_{2}}{{MFI}_{1}}$
- MFI₁ =: Schmelzflußindex des Propylenpolymeren vor dem Zusatz des organischen Peroxids
- MFI₂ =: Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Weiterhin ist es erfindungswesentlich, die Basisschicht mit einem Kohlenwasserstoffharz auszurüsten, wobei das Harz in einer Menge von 1 bis 15 Gew.-%, vorzugsweise 1 bis 10 Gew.-%, insbesondere 1 bis 8 Gew.-%, bezogen auf das Gesamtgewicht der Folie zugesetzt ist.

Kohlenwasserstoffharze sind niedermolekulare Polymere, deren mittleres Molekulargewicht M_{w} (Gewichtsmittel) im allgemeinen in einem Bereich von 300 bis 8 000, vorzugsweise 400 bis 5 000, insbesondere 500 bis 2 000, liegt. Damit ist das Molekulargewicht der Harze deutlich niedriger als das der Propylenpolymeren, welche die Hauptkomponente der einzelnen Folienschichten bilden und im allgemeinen ein mittleres Molekulargewicht M_{w} von über 100 000 haben. Die Kohlenwasserstoffharze können teilweise oder vollständig hydriert sein. Es hat sich als besonders vorteilhaft erwiesen, Harze mit einem Erweichungspunkt von ≥80 °C (gemessen nach DIN 1995-U4 bzw. ASTM E-28) einzusetzen, wobei solche mit einem Erweichungspunkt von 100 bis 180 °C, insbesondere 120 bis 160 °C, bevorzugt sind.

Als Kohlenwasserstoffharze werden eingesetzt Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel C₁₀H₁₆, die in fast allen etherischen Ölen oder ölhaltigen Harzen von Pflanzen enthalten sind, und phenolmodifizierte Terpenharze. Als spezielle Beispiele der Terpene sind Pinen, α-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 135 °C eingesetzt (bei den ungesättigten Polymerisaten ist das hydrierte Produkt bevorzugt). Ganz besonders bevorzugt werden die Cyclopentadienpolymerisate mit einem Erweichungspunkt von mindestens 140 ° C oder Copolymerisate aus a-Methylstyrol und Vinyltoluol mit einem Erweichungspunkt von 120 bis 150 °C in der Basisschicht eingesetzt.

Darüber hinaus kann die Basisschicht zusätzlich übliche Additive wie Antiblockmittel, Neutralisationsmittel, Stabilisatoren, Antistatika, Gleitmittel und Pigmente in jeweils wirksamen Mengen enthalten.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren wird Glycerinmonostearat in einer Menge von 0,03 % bis 0,5 % bevorzugt als Antistatikum eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Ein insbesondere geeignetes aliphatisches Säureamid ist Erucasäureamid.

Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 mm²/s.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g.

Pigmente umfassen solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,5 µm.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden.

Die Basisschicht enthält, wenn vorhanden, Pigmente im allgemeinen in einer Menge von 1 bis 25 Gew.-%, insbesondere 2 bis 20 Gew.-%, bevorzugt 5 bis 15 Gew.-%, jeweils bezogen auf die Basisschicht. Als Pigmente sind Weißpigmente, insbesondere TiO₂, Siliciumdioxid und BaSO₄ bevorzugt. Diese Pigmente haben bevorzugt einen mittleren Teilchendurchmesser von 0,01 bis 0,7 µm, insbesondere 0,01 bis 0,4 µm.

Die Titandioxidteilchen bestehen zu mindestens 95 Gew.-% aus Rutil und werden bevorzugt mit einem Überzug aus anorganischen Oxiden eingesetzt, wie er üblicherweise als Überzug für TiO₂-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. TiO₂-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den TiO₂-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g Ti0₂-Teilchen, enthalten. Als besonders vorteilhaft hat es sich erwiesen, wenn die TiO₂-Teilchen mit AI₂O₃ oder mit Al₂O₃ und Polydimethylsiloxan beschichtet sind.

Die erfindungsgemäße Polypropylenfolie umfaßt in einer bevorzugten Ausführungsform mindestens eine, gegebenenfalls beidseitig Deckschicht/en aus Polymeren aus α-Olefinen mit 2 bis 10 Kohlenstoffatomen. Im allgemeinen enthält die Deckschicht mindestens 70 Gew.-%, vorzugsweise 80 bis 100 Gew.-%, insbesondere 90 bis 98 Gew.-%, der a-olefinischen Polymeren, jeweils bezogen auf das Gewicht der Deckschicht.

Beispiele für derartige α-olefinische Polymere sind
ein Propylenhomopolymer oder
ein Copolymer von
   Ethylen und Propylen oder
   Ethylen und Butylen-1 oder
   Propylen und Butylen-1 oder
ein Terpolymer von
   Ethylen und Propylen und Butylen-1 oder
eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,
wobei insbesondere Propylenhomopolymer oder
statistische Ethylen-Propylen-Copolymere mit einem Ethylengehalt von 1 bis 10 Gew.-%, bevorzugt 2,5 bis 8 Gew.-%, oder
statistische Propylen-Butylen-1-Copolymere mit
einem Butylengehalt von 2 bis 25 Gew.-%, bevorzugt 4 bis 20 Gew.-%,
jeweils bezogen auf das Gesamtgewicht des Copolymeren, oder
statistische Ethylen-Propylen-Butylen-1-Terpolymere mit
einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder ein Blend aus einem Ethylen-Propylen-Butylen-1-Terpolymeren und einem Propylen-Butylen-1-Copolymeren
mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,
bevorzugt sind.

Das in der Deckschicht bevorzugt eingesetzte Propylenhomopolymere enthält zum überwiegenden Teil (mindestens 90 %) Propylen und besitzt im allgemeinen einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere hat im allgemeinen einen Schmelzflußindex von 1,5 g/10 min bis 20 g/10 min, vorzugsweise 2,0 g/10 min bis 15 g/10 min.

Gegebenenfalls enthält die Deckschicht das vorstehend für die Basisschicht beschriebene Propylenhomopolymere, dessen n-heptanunlöslicher Anteil hochisotaktisch ist. Vorzugsweise besteht die Deckschicht im wesentlichen aus diesem Homopolymeren.

Die in der Deckschicht bevorzugt eingesetzten vorstehend beschriebenen Copolymeren weisen im allgemeinen einen Schmelzflußindex von 1,5 bis 30 g/10 min, vorzugsweise von 3 bis 15 g/10 min, auf. Der Schmelzpunkt liegt vorzugsweise im Bereich von 120 bis 140 °C. Die in der Deckschicht eingesetzten Terpolymeren haben einen Schmelzflußindex im Bereich von 1,5 bis 30 g/10 min, vorzugsweise von 3 bis 15 g/10 min, und einen Schmelzpunkt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können alle vorstehend beschriebenen Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10.

In einer matten Ausführungsform enthält die Deckschicht zusätzlich ein High Density Polyethylen (HDPE), welches mit den vorstehend beschriebenen Deckschichtpolymeren gemischt oder geblendet wird. Die Zusammensetzung und Einzelheiten der matten Deckschichten sind beispielsweise in der deutschen Patentanmeldung DE-A-43 13 430 beschrieben, auf die hier ausdrücklich Bezug genommen wird.

Gegebenenfalls können der/den Deckschicht/en die vorstehend für die Basisschicht beschriebenen Additive wie Antistatika, Antiblockmittel, Pigmente, Gleitmittel, Neutralisationsmittel, Stabilisatoren und Kohlenwasserstoffharze zugesetzt werden. In einer bevorzugten Ausführungsform enthält/enthalten die Deckschicht/en eine Kombination von Antiblockmittel, vorzugsweise SiO₂, und Gleitmittel, vorzugsweise Polydimethylsiloxan.

Die erfindungsgemäße Folie umfaßt mindestens die vorstehend beschriebene Basisschicht, vorzugsweise mindestens eine Deckschicht. Je nach ihrem vorgesehenen Verwendungszweck kann die Folie eine weitere Deckschicht auf der gegenüberliegenden Seite aufweisen. Gegebenenfalls kann/können auch einseitig eine oder beidseitig Zwischenschicht/en zwischen der Basis- und der/den Deckschicht/en aufgebracht werden.

Bevorzugte Ausführungsformen der Polypropylenfolie sind dreischichtig. Aufbau, Dicke und Zusammensetzung einer zweiten Deckschicht können unabhängig von der bereits vorhandenen Deckschicht gewählt werden, wobei die zweite Deckschicht ebenfalls eine der vorstehend beschriebenen Polymeren oder Polymermischungen enthalten kann, welche aber nicht mit der der ersten Deckschicht identisch sein muß. Die zweite Deckschicht kann jedoch auch andere gängige Deckschichtpolymere enthalten.

Die Dicke der Deckschicht/en ist im allgemeinen größer als 0,1 µm und liegt vorzugsweise im Bereich von 0,3 bis 3 µm, insbesondere 0,4 bis 1,5 µm, wobei beidseitige Deckschichten gleich oder verschieden dick sein können.

Die Zwischenschicht/en kann/können aus den für die Deckschichten beschriebenen α-olefinischen Polymeren bestehen. In einer besonders bevorzugten Ausführungsform besteht/bestehen die Zwischenschicht/en aus dem für die Basisschicht beschriebenen hochkristallinen Propylenhomopolymeren. Die Zwischenschicht/en kann/können die für die einzelnen Schichten beschriebenen üblichen Additive enthalten.

Die Dicke der Zwischenschicht/en ist im allgemeinen größer als 0,3 µm und liegt vorzugsweise im Bereich von 1,0 bis 15 µm, insbesondere 1,5 bis 10 µm.

Die Gesamtdicke der erfindungsgemäßen Polypropylenfolie kann innerhalb weiter Grenzen variieren und richtet sich nach dem beabsichtigten Einsatz. Sie beträgt vorzugsweise 4 bis 60 µm, insbesondere 5 bis 30 µm, vorzugsweise 6 bis 25 µm, wobei die Basisschicht etwa 40 bis 100 % der Gesamtfoliendicke ausmacht.

Die Erfindung betrifft weiterhin ein Verfahren zur Herstellung der erfindungsgemäßen Polypropylenfolie nach dem an sich bekannten Coextrusionsverfahren.

Im Rahmen dieses Verfahrens wird so vorgegangen, daß die Schicht oder die den einzelnen Schichten der Folie entsprechende/n Schmelze/n durch eine Flachdüse coextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstrekkungsverhältnisse liegen im Bereich von 5,0 bis 9, vorzugsweise 5,5 bis 8,5. Die Querstreckverhältnisse liegen im Bereich von 5,0 bis 10,0, vorzugsweise 7,0 bis 9,0.

An die biaxiale Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 10 bis 100 °C, vorzugsweise 20 bis 70 °C, zu halten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung vorzugsweise bei 80 bis 150 °C und die Querstreckung vorzugsweise bei 120 bis 170 °C durchgeführt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von 37 bis 50 mN/m, vorzugsweise 39 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Folie zeichnet sich durch hervorragende mechanische Festigkeiten aus.

Der Elastizitätsmodul der Folie in Längsrichtung liegt bei größer 2 700 N/mm², vorzugsweise größer 2 900 N/mm², und der Elastizitätsmodul der Folie in Querrichtung liegt bei größer 3 800 N/mm², vorzugsweise größer 4 200 N/mm². Überraschenderweise wurde gefunden, daß zur Erzielung dieser ausgezeichneten Elastizitätsmodule im Vergleich zum Stand der Technik wesentlich weniger Harz zugesetzt werden muß. Nach dem Stand der Technik werden der Basisschicht etwa 15 bis 30 Gew.-% Harz zugegeben, um die guten mechanischen Eigenschaften zu erreichen. Bei der erfindungsgemäßen Folie ist der Harzzusatz deutlich geringer, er beträgt 1 bis 15 Gew.-%, vorzugsweise 3 bis 10 Gew.-%. Bei diesen niedrigen Harzkonzentrationen treten so gut wie keine Harzablagerungen an der Schnecke des Extruders und an den Walzen der Längsstreckung auf. Außerdem zeichnet sich die Folie durch niedrige Warmblockwerte und durch ein ausgezeichnetes, blockfreies Verhalten bei der Weiterverarbeitung aus.

Überraschenderweise sind die erfindungsgemäßen Folien selbst mit einer Dicke von unter 20 µm noch ausreichend steif, um auf den modernen schnellaufenden Verpackungsmaschinen verarbeitet zu werden. Mit dieser Folie ist es daher möglich, den Kunststoffanteil von Verpackungen weiter zu senken, ohne daß Qualitätseinbußen der Verpackung auftreten.

Weiterhin zeichnen sich die Folien durch eine deutlich verbesserte Barriere vor allem gegenüber Wasserdampf und Sauerstoff aus. Überraschenderweise wurde auch hier gefunden, daβ zur Erzielung dieser guten Barrierewerte deutlich weniger Harz der Folie zugesetzt werden muß, als es nach dem Stand der Technik bekannt ist. Bei der eingangs im Stand der Technik beschriebenen 25µm dicken Folie mit einer Wasserdampfdurchlässigkeit von 1,1 g/m²·d genügt beispielsweise die Zugabe von 5 % Kohlenwasserstoffharz, um bei der erfindungsgemäßen Folie die Wasserdampfbarriere auf 0,6 g/m²·d herabzusetzen. Bei Folien nach dem Stand der Technik ist dafür die Zugabe von mindestens 10 Gew.-% Harz notwendig.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Schmelzpunkt

DSC-Messung, Maximum der Schmelzkurve, Aufheizgeschwindigkeit 20 °C/min.

### Wasserdampf- und Sauerstoffdurchlässigkeit

Die Wasserdampfdurchlässigkeit wird gemäß DIN 53 122 Teil 2 bestimmt. Die Bestimmung der Sauerstoffbarrierewirkung erfolgt gemäß Entwurf DIN 53 380 Teil 3 bei einer Luftfeuchte von 53 %.

### Trübung

Die Trübung der Folie wurde nach ASTM-D 1003-52 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Oberflächenspannung

Die Oberflächenspannung wurde mittels der sogenannten Tintenmethode (DIN 53 364) bestimmt.

### Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

### Reißfestigkeit, Reißdehnung

Die Reißfestigkeit und die Reißdehnung werden nach DIN 53455 bestimmt.

### E-Modul

Der E-Modul wird gemäß DIN 53 457 bzw. ASTM 882 bestimmt.

### Bestimmung des Warmblockverhaltens

Zur Messung des Warmblockverhaltens werden zwei einseitig filzbeklebte Holzklötzchen mit den Abmessungen 72 mm x 41 mm x 13 mm in die zu vermessende Folie eingeschlagen und gesiegelt. Auf die mit den Filzauflagen zueinandergekehrten Holzklötzchen wird ein Gewicht von 200 g plaziert und dieser Aufbau in einen auf 70 °C vortemperierten Wärmeofen gebracht und dort über 2 h belassen. Danach wird für 30 min auf Raumtemperatur (21 °C) abgekühlt, das Gewicht von den Holzklötzchen heruntergenommen und das obere Klötzchen mittels einer mechanischen Apparatur vom unteren Klötzchen heruntergezogen. Die Auswertung erfolgt über 4 Einzelmessungen, über die dann eine maximale Abschubkraft (gemessen in N) festgestellt wird. Die Spezifikation ist erfüllt, wenn keine der Einzelmessungen über 5 N liegt.

### Molekulargewichtsbestimmung

Das mittlere Molekulargewicht M_{w} und Mₙ (Gewichtsmittel M_{w} und Zahlenmittel Mₙ) und die mittlere Molmassen-Dispersität wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (≈ 135 °C) durchgeführt.

### Isotaktischer Anteil

Sowohl der isotaktische Anteil des Homopolymeren als auch der isotaktische Anteil der Folie können in Näherung durch die unlösliche Fraktion des Rohstoffes bzw. der Folie in einem geeigneten Lösungsmittel charakterisiert werden. Es hat sich als zweckmäßig erwiesen n-Heptan zu verwenden. Üblicherweise führt man eine Soxhlet-Extraktion mit siedendem n-Heptan durch. Zur Erzielung einer guten Reproduzierbarkeit ist es zweckmäßig, das Soxhlet anstelle von Granulat mit einem Preßling zu befüllen. Die Dicke des Preßlings sollte hierbei 500 Mikrometer nicht übersteigen. Für die quantitative Erfassung des ataktischen Anteils des Homopolymeren ist es von entscheidender Bedeutung, eine ausreichende Extraktionszeit sicherzustellen. In der Regel liegt die Extraktionszeit im Bereich von 8 bis 24 Stunden.

Die operationelle Definition des isotaktischen Anteils PP_{ISO} in Prozent ist gegeben durch das Verhältnis der Gewichte der getrockneten n-heptanunlösüchen Fraktion zur Einwaage: ${PP}_{ISO} = 100 \times \left(n-heptanunlösliche Fraktion/Einwaage\right)$

Eine Analyse des getrockneten n-Heptan-Extraktes zeigt, daß dieser in der Regel nicht aus reinem ataktischen Propylenhomopolymeren besteht. Bei der Extraktion werden auch aliphatische und olefinische Oligomere, insbesondere isotaktische Oligomere sowie auch mögliche Zusatzstoffe wie z. B. hydrierte Kohlenwasserstoffharze, miterfaßt.

### Kettenisotaxie-Index

Der oben definierte isotaktische Anteil PP_{ISO} ist für die Charakterisierung der Kettenisotaxie des Homopolymeren nicht ausreichend. Es erweist sich als sinnvoll, den Kettenisotaxie-Index II des Homopolymeren mittels hochauflösender ¹³C-NMR-Spektroskopie zu bestimmen, wobei als NMR-Probe nicht der Originalrohstoff, sondern dessen n-heptanunlösliche Fraktion zu wählen ist. Zur Charakterisierung der Isotaxie von Polymerketten benutzt man in der Praxis meist den ¹³C-NMR-spektroskopischen Triaden-Isotaxie-Index II (Triaden).

### Bestimmung des triadenbezogenen Kettenisotaxie-Index II (Triaden)

Die Bestimmung des Kettenisotaxie-Index II (Triaden) des n-heptanunlöslichen Anteils des Homopolymeren sowie der Folie wird aus dessen bzw. deren ¹³C-NMR-Spektrum bestimmt. Man vergleicht die Intensitäten von Triaden-Signalen, welche aus den Methylgruppen mit unterschiedlichen lokalen Umgebungen resultieren.

Hinsichtlich der Auswertung des ¹³C-NMR-Spektrums sind zwei Fälle zu unterscheiden:
A) Der untersuchte Rohstoff ist ein Propylenhomopolymer ohne statistischen C₂-Gehalt.
B) Der untersuchte Rohstoff ist ein Propylenhomopolymer mit einem geringen statistischen C₂-Gehalt, im folgenden C₂-C₃-Copolymer genannt.

### Fall A:

Der Kettenisotaxie-Index des Homopolymeren wird aus dessen ¹³C-NMR-Spektrum bestimmt. Man vergleicht die Intensitäten von Signalen, welche aus den Methylgruppen mit unterschiedlicher Umgebung resultieren. Im ¹³C-NMR-Spektrum eines Homopolymeren treten im wesentlichen drei Gruppen von Signalen, sogenannte Triaden, auf.
1. Bei einer chemischen Verschiebung von etwa 21 bis 22 ppm tritt die "mm-Triade" auf, welche den Methylgruppen mit links und rechts unmittelbar benachbarten Methylgruppen zugeordnet wird.
2. Bei einer chemischen Verschiebung von etwa 20,2 bis 21 ppm tritt die "mr-Triade" auf, welche den Methylgruppen mit links oder rechts unmittelbar benachbarten Methylgruppen zugeordnet wird.
3. Bei einer chemischen Verschiebung von etwa 19,3 bis 20 ppm tritt die "rr-Triade" auf, welche den Methylgruppen ohne unmittelbar benachbarte Methylgruppen zugeordnet wird.

Die Intensitäten der zugeordneten Signalgruppen werden als Integral der Signale bestimmt. Der Kettenisotaxie-Index ist wie folgt definiert: $II Triaden = \frac{{J}_{mm} + 0 , 5 ⁢ { J}_{mr}}{{J}_{mm} + {J}_{mr} + {J}_{rr}} ⋅ 100$ worin Jₘₘ, Jₘᵣ und Jᵣᵣ die Integrale der zugeordneten Signalgruppen bedeuten.

### Fall B:

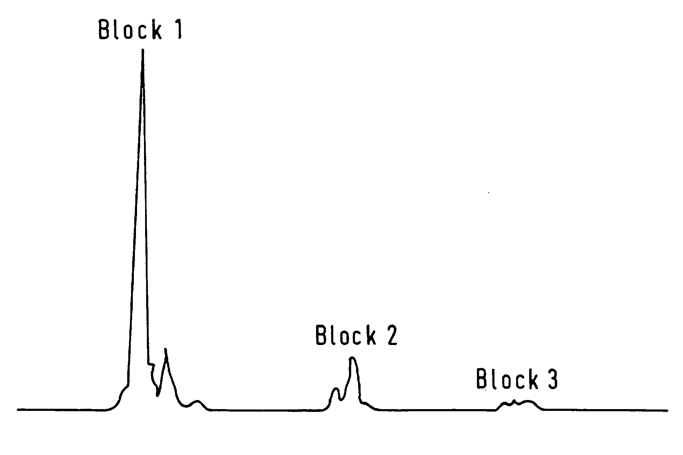

Abb. 1 ist eine schematisch vergrößerte Darstellung eines ¹³C-NMR Spektrums von einem Ethylen-Propylen-Copolymeren. Die chemische Verschiebung der interessierenden Methylgruppen liegt im Bereich 19 bis 22 ppm. Wie in Abb. 1 ersichtlich kann das Spektrum der Methylgruppen in drei Blöcke unterteilt werden. In diesen Blöcken erscheinen die CH₃-Gruppen in triadischen Sequenzen, deren Zuordnung zu den lokalen Umgebungen im folgenden näher erläutert wird:

### Block 1:

CH₃-Gruppen in der PPP-Sequenz (mm-Triade)

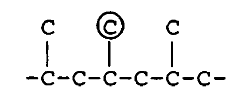

### Block 2:

CH₃-Gruppen in der PPP-Sequenz (mr- oder rm-Triaden) 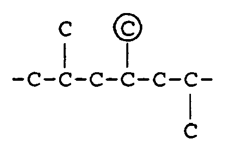 und CH₃-Gruppen in der EPP-Sequenz (m-Kette):

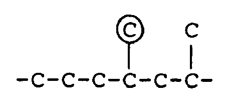

### Block 3

CH₃-Gruppen in der PPP-Sequenz (rr-Triaden): 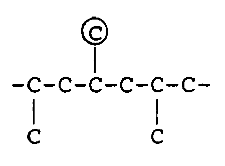 CH₃-Gruppen in einer EPP-Sequenz (r-Kette): 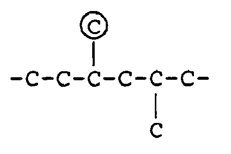 CH₃-Gruppen in einer EPE-Sequenz:

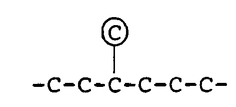

Bei der Bestimmung des triadenbezogenen Kettenisotaxie-Index II (Triaden) des n-heptanunlöslichen Anteils eines Ethylen-Propylen-Copolymers werden nur PPP-Triaden in Betracht gezogen, d. h. nur solche Propylen-Einheiten, die zwischen zwei benachbarten Propylen-Einheiten liegen (siehe auch EP-B-0 115 940, Seite 3, Zeilen 48 und 49).

Die Definition des Triaden-Isotaxie-Index eines Ethylen-Propylen-Copolymeren lautet: $II \left(Triaden\right) = 100 \times \left({J}_{mm}/{J}_{ppp}\right)$

Berechnung des Kettenisotaxie-Index eines Ethylen-Propylen-Copolymers:
1. Jₘₘ ist gegeben durch das Peakintegral von Block 1.
2. Berechne das Integral (J_{gesamt}) aller Methylgruppenpeaks in den Blöcken 1, 2 und 3.
3. Durch einfache Betrachtungen läßt sich zeigen, daβ Jₚₚₚ=J_{gesamt}-J_{EPP}-J_{EPE}.

### Probenvorbereitung und Messung:

60 bis 100 mg Polypropylen werden in 10 mm-NMR-Röhrchen eingewogen und Hexachlorbutadien und Tetrachlorethan in einem Mischungsverhältnis von etwa 1,5:1 zugegeben, bis eine Füllhöhe von ca. 45 mm erreicht ist. Die Suspension wird so lange (in der Regel ca. eine Stunde) bei ca. 140 °C aufbewahrt, bis eine homogene Lösung entstanden ist. Um den Lösevorgang zu beschleunigen, wird die Probe von Zeit zu Zeit mit einem Glasstab gerührt.

Die Aufnahme des ¹³C-NMR-Spektrums erfolgt bei erhöhter Temperatur (in der Regel 365 K) unter Standardmeßbedingungen (halbquantitativ).

### Beispiel 1

Es wurde durch Coextrusion und anschließende stufenweise Orientierung in Längs- und Querrichtung eine transparente dreischichtige Folie mit symmetrischem Aufbau mit einer Gesamtdicke von 16 µm hergestellt. Die Deckschichten hatten eine Dicke von jeweils 0,6 µm.

A-Basisschicht:

| | |
|---|---|
| 96,85 Gew.-% | hochisotaktisches Polypropylen der Firma Solvay mit dem Markennamen ^{®}Eltex P HCL 480 |
| 3,0 Gew.-% | Kohlenwasserstoffharz (^{®}Escorez ECR 356 der Firma Exxon, Darien, Connecticut, USA; Erweichungspunkt 140 °C) |
| 0,15 Gew.-% | N,N-bis-ethoxyalkylamin |

Der n-heptanunlösliche Anteil der Folie hatte einen Kettenisotaxie-Index von 96%.

### B-Deckschichten:

| | |
|---|---|
| 98,77 Gew.-% | statistisches Ethylen-Propylen-Copolymeres mit einem C₂-Gehalt von 4,5 Gew.-% |
| 0,33 Gew.-% | SiO₂ als Antiblockmittel mit einer mittleren Teilchengröße von 2 µm |
| 0,90 Gew.-% | Polydimethylsiloxan mit einer Viskosität von 30 000 mm²/s |

Die Herstellungsbedingungen in den einzelnen Verfahrensschritten waren:

| | | | |
|---|---|---|---|
| Extrusion: | Temperaturen | A-Schicht: | 280 °C |
| | | B-Schichten: | 280 °C |
| | Temperatur der Abzugswalze: | | 30 °C |
| Längsstreckung: | Temperatur: | | 135 °C |
| | Längsstreckverhältnis: | | 6,5 |
| Querstreckung: | Temperatur: | | 160 °C |
| | Querstreckverhältnis: | | 8,5 |
| Fixierung: | Temperatur: | | 110 °C |
| | Konvergenz: | | 20 % |

Bei dem Querstreckverhältnis λ_{Q} = 8,5 handelt es sich um einen Effektivwert. Dieser Effektivwert berechnet sich aus der Endfolienbreite B_{,} reduziert um die zweifache Säumstreifenbreite b, dividiert durch die Breite der längsgestreckten Folie C, ebenfalls um die zweifache Säumstreifenbreite b reduziert.

| | | |
|---|---|---|
| Zahlenangaben: | Endfolienbreite | B = 4 000 mm |
| | Endfoliendicke | d = 16 µm |
| | Säumstreifenbreite | b = 40 mm |
| | Breite der längsgestreckten Folie | C = 530 mm |

Die auf diese Weise hergestellte Folie hatte die in der Tabelle aufgelisteten Eigenschaften (erste Zeile: Beispiel 1).

### Beispiel 2

Wie in Beispiel 1 wurde eine dreischichtige Folie mit einer Gesamtdicke von 16µm und mit Deckschichtdicken von jeweils 0,5 *µ*m hergestellt. Die Rohstoffzusammensetzung für die Basisschicht und für die Deckschichten ist ebenfalls die gleiche wie in Beispiel 1. Geändert wurden lediglich die Bedingungen in der Längs- und Querstreckung:

| | | |
|---|---|---|
| Längsstreckung: | Temperatur: | 135 °C |
| | Längsstreckverhältnis: | 7,5 |
| Querstreckung: | Temperatur: | 160 °C |
| | Querstreckverhältnis: | 8,0 |

Die Folieneigenschaften sind in der Tabelle - zweite Zeile (Beispiel 2) - aufgelistet.

### Beispiel 3

Im Unterschied zu Beispiel 1 enthielt die Folie jetzt in der Basisschicht 5 Gew.-% Kohlenwasserstoffharz der Firma Exxon ^{®}ECR 356. Die Streckbedingungen waren identisch zu denjenigen in Beispiel 1.

### Beispiel 4

Wie in Beispiel 3 wurde eine dreischichtige Folie mit einer Gesamtdicke von 16 µm und mit Deckschichtdicken von jeweils 0,5 µm hergestellt. Die Rohstoffzusammensetzung für die Basisschicht und für die Deckschichten war ebenfalls die gleiche wie in Beispiel 3. Geändert wurden die Bedingungen in der Längs- und Querstreckung gemäß Beispiel 2.

### Beispiel 5

Die Rohstoffzusammensetzung für die Deckschichten war die gleiche wie in Beispiel 3. Geändert wurde der Harzanteil in der Basisschicht von 5 auf 10 Gew.-%. Die Verfahrensbedingungen in den beiden Streckaggregaten waren wie in Beispiel 2.

### Beispiel 6

Die Rezeptur für die Basisschicht wurde wie in Beispiel 3 gewählt. Bei den Deckschichten wurde der Siloxangehalt von 0,9 Gew.-% auf 1,6 Gew.-% erhöht. Damit wurde das Schlupfvermögen der Folie stark verbessert. Die Verfahrensbedingungen waren diejenigen aus Beispiel 2.

### Beispiel 7

Für die Basisschicht wurde die Rezeptur von Beispiel 5 übernommen. Zusätzlich enthielt die Basisschicht noch Erucasäureamid als Gleitmittel in der Konzentration von 0,2 Gew.-%, bezogen auf die Basisschicht. Die Deckschichten enthielten ebenfalls das hochisotaktische Polypropylen der Firma Solvay. Als Antiblockmittel wurde in den Deckschichten das Siliciumdioxid aus Beispiel 1 in der gleichen Konzentration verwendet. Die Verfahrensparameter wurden Beispiel 2 entnommen. Die mechanischen Eigenschaften dieser Folie waren gegenüber der Folie aus Beispiel 2 verbessert.

### Beispiel 8

Die Dicke der Basisschicht wurde beibehalten. Die Deckschichtdicken betrugen jeweils 1 µm. Die Basisschicht enthielt 5 Gew.-% Harz. Die Deckschichten waren wie in Beispiel 1 symmetrisch angeordnet und hatten folgende Rezeptur:

| | |
|---|---|
| 68,77 Gew.-% | statistisches Ethylen-Propylen-Copolymeres mit einem C₂ Gehalt von 4,6 Gew.-% |
| 30,0 Gew.-% | Hochdruckpolyethylen mit einem Schmelzflußindex von 2 g/10 min der Firma Hoechst mit dem Markennamen ^{®}HOSTALEN GD 7255 |
| 0,33 Gew.-% | SiO₂ als Antiblockmittel mit einer mittleren Teilchengröße von 2 µm |
| 0,90 Gew.-% | Polydimethylsiloxan mit einer Viskosität von 30 000 mm²/s |

Die Herstellungsbedingungen in den einzelnen Verfahrensschritten waren wie in Beispiel 1 angegeben.

Im Vergleich zu den bisherigen Beispielen hatte die Folie ein mattes Aussehen.

### Beispiel 9

Die Rezeptur der Folie war wie im Beispiel 5. Die Streckbedingungen wurden Beispiel 1 entnommen. Die Foliendicke betrug jetzt 20 µm anstelle von 16 µm.

### Vergleichsbeispiel 1

Es wurde das in der EP-A-0 046 833 aufgeführte Beispiel 1 nachgearbeitet. Der n-heptanlösliche Anteil der Folie hatte einen mittels ¹³C-NMR-Spektroskopie gemessenen Kettenisotaxie-Index von 93 %. Der Harzanteil in der Basisschicht betrug 10 Gew.-%. Im Vergleich zur erfindungsgemäßen Folie (vgl. Beispiel 9) sind die Barrierewerte für Wasserdampf und der Zug-Elastizitätsmodul deutlich niedriger.

**TABELLE**

| | Foliendicke | E-Modul DIN 53 457 längs/quer | Reißfestigkeit DIN 53 455 längs/quer | Reißdehnung DIN 53 455 längs/quer | Glanz DIN 67 530 | Wasserdampfdurchlässigkeit DIN 53 122 | Trübung ASTM D 1003-52 | Reibung 14 Tage nach Produktion | Kratzfestigkeit | Warmblockverhalten |
|---|---|---|---|---|---|---|---|---|---|---|
| | µm | N/mm² | N/mm² | % | | g/m²*d | % | B-Seite/B'-Seite | ΔTrubung | N |
| B1 | 16 | 2950/4300 | 195/260 | 125/70 | 100 | 1,22 | 2,0 | 0,23/0,25 | 25 | 1,5 |
| B2 | 16 | 3 100/4 250 | 200/255 | 110/70 | 100 | 1,22 | 2,0 | 0,25/0,25 | 25 | 1,0 |
| B3 | 16 | 3 100/4 300 | 200/270 | 120/70 | 100 | 1,1 | 2,0 | 0.27/0,27 | 25 | 1,5 |
| B4 | 16 | 3 300/4 400 | 220/280 | 110/70 | 105 | 1,1 | 2,0 | 0,24/0,25 | 25 | 1,5 |
| B5 | 16 | 3 500/4 450 | 240/290 | 100/70 | 95 | 0,7 | 2,0 | 0,23/0,25 | 25 | 2,0 |
| B6 | 16 | 3 150/4 300 | 210/300 | 100/70 | 105 | 1,1 | 2,0 | 0,20/0,19 | 25 | 1.3 |
| B7 | 16 | 3 600/4 500 | 250/310 | 95/70 | 130 | 0,95 | 0,7 | 0,20/0,20 | 10 | - |
| B8 | 16 | 2 950/4 250 | 195/260 | 125/75 | 20 | 1,1 | 4,0 | 0,20/0,20 | 35 | 0,5 |
| B9 | 16 | 3300/4500 | 210/330 | 120/70 | 100 | 0,7 | 2,0 | 0,24/0,27 | 27 | 2,0 |
| VB1 | 20 | 2 300/4 300 | 165/330 | 160/60 | 100 | 0,88 | 2,0 | 0,24/0,27 | 27 | 7,0 |

| | | | | | | | | | | |
|---|---|---|---|---|---|---|---|---|---|---|
| B = Beispiel; VB = Vergleichsbeispiel B-Seite. Walzenseite B'-Seite. Seile für die Corona- oder Flammbehandlung, falls diese Behandlung durchgeführt wird | | | | | | | | | | |

## Patentansprüche

1. Biaxial orientierte Polypropylenfolie aus einer Basisschicht aus mindestens 85 Gew.% eines Propylenhomopolymeren und gegebenenfalls einer Deckschicht **dadurch gekennzeichnet, daß** der n-heptanunlösliche Anteil des Propylenhomopolymeren der Basisschicht einen Kettenisotaxie-index, gemessen mittels 13C-NMR-Spektroskopie, von mindestens 95 % aufweist und daß die Basisschicht 1 bis 25 Gew.-% Pigmente und 1 bis 15 Gew.-% eines natürlichen oder synthetischen Kohlenwasserstoffharzes mit einem Molekulargewicht Mw (Gewichtsmittel) von 300 bis 2000 und einem Erweichungspunkt von 70 bis 170°C enthält, wobei das Kohlenwasserstoffharz ein Petroleumharz, Styrolharz, Cylopentadienharz oder Terpenharz ist.

2. Dreischichtige biaxial orientierte Polypropylenfolie aus einer Basisschicht aus mindestens 85 Gew.-% eines Propylenhomopolymeren und beidseitig Deckschichten **dadurch gekennzeichnet, daß** der n-heptanunlösliche Anteil des Propylenhomopolymeren der Basisschicht einen Kettenisotaxie-Index, gemessen mittels 13C-NMR-Spekiroskopie, von mindestens 95 % aufweist und daß die Basisschicht 1 bis 15 Gew.-% eines natürlichen oder synthetischen Kohlenwasserstoffharzes mit einem Molekulargewicht Mw (Gewichtsmittel) von 300 bis 2000 und einem Erweichungspunkt von 70, bis 170 °C enthält und wobei das Kohlenwasserstoffharz ein Petroleumharz, Styrolharz, Cylopentadienharz oder Terpenharz ist ausgenommen solche Folien die 5 Gew.-% oder mehr als 5 Gew.-% eines Terpenharzes oder gegebenenfalls hydrierten Petroleumharzes in der Basisschicht enthalten.

3. Biaxial orientierte Polypropylenfolie mit einer Bassischicht aus mindestens 85 Gew.-% eines Propylenhomopolymeren **dadurch gekennzeichnet, daß** der n-heptanunlösliche Anteil des Propylenhomopolymeren des Basisschicht einen Kettenisotaxie-Index, gemessen mittels 13C-NMR-Spektroskopie, von mindestens 95% aufweist und daß die Basisschicht 1 bis 25 Gew.-% Pigmente und 1 bis 15 Gew.-% eines natürlichen oder synthetischen Kohlenwasserstoffharzes mit einem Molekulargewicht Mw (Gewichtsmittel) 300 von 2000 und einem Erweichungspunkt von 70 bis 170 °C enthält, wobei das Kohlenwasserstoffharz ein Petroleumharz, Styrolharz, Cylopentadienharz oder Terpenharz ist und die Folie vierschichtig aufgebaut ist und beidseitig Deckschichten und eine Zwischen-Schicht aufweist.

4. Biaxial orientierte Polypropylenfolie mit einer Basisschicht aus mindestens 85 Gew.-% einen Propylenhomopolymeren **dadurch gekennzeichnet, daß** der n-heptanunlösliche Anteil des Propylenhomopolymeren des Basisschicht einen Kettenisotaxie-Index, gemessen mittels 13C-NMR-Spektroskopie, von mindestens 95 % aufweist und daß die Basisschicht 1 bis 15 Gew.-% eines natürlichen oder synthetischen Kohlenwasserstoffharzes mit einem Molekulargewicht Mw (Gewichtsmittel) von 300 bis 2000 und einem Erweichungspunkt von 70 bis 170 °C enthält, wobei das Kohlenwasserstoffharz ein Petroleumharz, Styrolharz, Cylopentadienharz oder Terpenharz ist und die Folie beidseitig Deckschichten und beidseitig Zwischenschichten aufweist, ausgenommen Folien bei denen beide Zwischenschichten aus einem hochisotaktisches Polpropylen mit einer Isotaktizität von > 94% aufgebaut sind.

5. Polypropylenfolie nach einem der Ansprüche 1 bis 4 , **dadurch gekennzeichnet, dass** die Wasserdampfbarriere (WDD) der Folie (DIN 53 122) die Formel $WDD \leq \frac{C 1}{d 1 + D * X}$ erfüllt, wobei d die Dicke der Folie in µm, C = 22,5 g* µm/m² * d, D = 5 und X der relative Harzgehalt der Folie sind.

6. Polypropylenfolie nach einem der Ansprüche 1 bis 5 , **dadurch gekennzeichnet, dass** der Elastizitätsmodul der Folie in Längsrichtung grösser 2 700 N/mm² und der Elastizitätsmodul der Folie in Querrichtung grösser 3 800 N/mm² ist (bestimmt gemäß DIN 53 457 bzw. ASTM 882).

7. Polypropylenfolie nach einem der Ansprüche 1 bis 6, **dadurch gekennzeichnet, dass** die Reissfestigkeit in Längsrichtung grösser 180 N/mm² und in Querrichtung grösser 250 N/mm² ist und die Reissdehnung in Längsrichtung kleiner 130 % und in Querrichtung grösser 60 % ist (bestimmt gemäß DIN 53 455).

8. Polypropylenfolie nach einem der Ansprüche 1 bis 7, **dadurch gekennzeichnet, dass** die Basisschicht ein Polypropylen enthält, dessen n-heptanunlöslicher Anteil einen Kettenisotaxie-Index, gemessen mittels C-NMR-Spektroskopie, von 95,5 bis 98 %, aufweist.

9. Polypropylenfolie nach einem der Ansprüche 1 bis 8, **dadurch gekennzeichnet, dass** die Basisschicht ein Polypropylen enthält, dessen Mw/Mn grösser 6, vorzugsweise 7 bis 15, ist.

10. Verfahren zur Herstellung einer Polypropylenfolie gemäss Anspruch 1, **dadurch gekennzeichnet, dass** die Orientierung in Längsrichtung mit einem Längsstreckverhältnis von 5:1 bis 9:1 und in Querrichtung mit einem Querstreckverhältnis von 5:1 bis 9:1 erfolgt.

11. Verwendung der Polypropylenfolie gemäss einem oder mehreren Ansprüchen 1 bis 9 als Verpackungsfolie.

12. Verwendung der Polypropylenfolie gemäss einem oder mehreren Ansprüchen 1 bis 9 als Kaschierfolie.

13. Verpackung, enthaltend eine Polypropylenfolie gemäss einem der Ansprüche 1 bis 9.

## Claims

1. A biaxially oriented polypropylene film having a base layer of at least 85 wt% of a homopolymeric propylene and if necessary a cover layer, **characterized in that** the n-heptane insoluble portion of the homopolymeric propylene of the base layer has a chain-isotaxy index, measured by means of ¹³C-NMR spectroscopy, of at least 95% and that the base layer contains 1 to 25 wt% pigments and 1 to 15 wt% of a natural or synthetic hydrocarbon resin with a molecular weight Mw (mean weight) of 300 to 2000 and a softening point of 70 to 170 °C, wherein the hydrocarbon resin is a petroleum resin, a styrene resin, cyclopentadiene resin or terpene resin.

2. A three-layer biaxially oriented polypropylene film, having a base layer of at least 85 wt% of a homopolymeric propylene and cover layers on both sides, **characterized in that** the n-heptane insoluble portion of the homopolymeric propylene of the base layer has a chain isotaxy index, measured by means of ¹³C-NMR spectroscopy, of at least 95% and that the base layer contains 1 to 15 wt% of a natural or synthetic hydrocarbon resin with a molecular weight Mw (median weight) of 300 to 2000 and a softening point of 70 to 170 °C, wherein the hydrocarbon resin is a petroleum resin, a styrene resin, cyclopentadiene resin or terpene resin, excepting such films, which contain 5 wt% or more than 5 wt% of a terpene resin or if necessary hydrated petroleum resin in the base layer.

3. A biaxially oriented polypropylene film, with a base layer having at least 95 wt% of a homopolymeric propylene and if necessary a cover layer, **characterized in that** the n-heptane insoluble portion of the homopolymeric propylene of the base layer has a chain isotaxy index, measured by means of ¹³C-NMR spectroscopy, of at least 95% and that the base layer contains 1 to 25 wt% pigments and 1 to 15 wt% of a natural or synthetic hydrocarbon resin with a molecular weight Mw (median weight) of 300 to 2000 and a softening point of 70 to 170 °C, wherein the hydrocarbon resin is a petroleum resin, a styrene resin, cyclopentadiene resin or terpene resin and the film is constructed with four layers and has cover layers on both sides and an intermediate layer.

4. A biaxially oriented polypropylene film, with a base layer of at least 85 wt% of a homopolymeric propylene, **characterized in that** the n-heptane insoluble portion of the homopolymeric propylene of the base layer has a chain isotaxy index, measured by means of ¹³C-NMR spectroscopy, of at least 95% and that the base layer contains 1 to 15 wt% of a natural or synthetic hydrocarbon resin with a molecular weight Mw (median weight) of 300 to 2000 and a softening point of 70 to 170 °C, wherein the hydrocarbon resin is a petroleum resin, a styrene resin, cyclopentadiene resin or terpene resin, and the film has cover layers on both sides and intermediate layers on both sides, excepting films in which both intermediate layers are formed from a highly isotactic polypropylene with an isotacticity of >94%.

5. The polypropylene film according to one of claims 1 through 4, **characterized in that** the steam barrier (WDD) of the film (DIN 53 122) complies with the formula $WDD ⊘ \frac{C 1}{d 1 + D * X}$ wherein d is the film thickness in µm, C = 22.5 g* µm/m²*d, D = 5 and X is the relative resin content of the film.

6. The polypropylene film according to one of claims 1 through 5, **characterized in that** the elastic modulus of the film in the longitudinal direction is greater than 2,700 N/mm² and the elastic modulus of the film in the transverse direction is greater than 3,800 N/mm² (determined in accordance with DIN 53 457 or ASTM 882).

7. The polypropylene film according to one of claims 1 through 6, **characterized in that** the tear strength in the longitudinal direction is greater than 180 N/mm² and in the transverse direction is greater than 250 N/mm² and the elongation at break in the longitudinal direction is smaller than 130% and in the transverse direction is greater than 60% (determined in accordance with DIN 53 455).

8. The polypropylene film according to one of claims 1 through 7, **characterized in that** the base layer contains a polypropylene, whose n-heptane insoluble portion has a chain isotaxy index, measured by means of C-NMR spectroscopy, of 95.5 to 98 %.

9. The polypropylene film according to one of claims 1 through 8, **characterized in that** the base layer contains a polypropylene whose Mw/Mn is larger than 6, preferably 7 to 15.

10. The method for manufacturing a polypropylene film in accordance with claim 1, **characterized in that** the orientation takes place in the longitudinal direction with a longitudinal stretch ratio of 5:1 to 9:1 and in the transverse direction with a transverse stretch ratio of 5:1 to 9:1.

11. Use of the polypropylene film in accordance with one or more of claims 1 through 9 as a packing film.

12. Use of the polypropylene film in accordance with one or more of claims 1 through 9 as a lamination film.

13. Packing, containing a polypropylene film in accordance with one of claims 1 through 9.

## Revendications

1. Film polypropylène biorienté, constitué d'une couche de base contenant au moins 85% en poids d'un homopolymère polypropylène et éventuellement d'une couche de recouvrement, **caractérisé en ce que** la fraction insoluble dans le n-heptane de l'homopolymère polypropylène de la couche de base présente un indice d'isotacticité de chaîne d'au moins 95%, mesuré au moyen de la spectroscopie RMN ¹³C et **en ce que** la couche de base contient 1 à 25 % en poids de pigments et 1 à 15 % en poids d'une résine hydrocarbonée, naturelle ou synthétique, ayant une masse moléculaire Mw (moyenne pondérale) allant de 300 à 2000 et un point de ramollissement de 70 à 170°C, la résine hydrocarbonée étant une résine de pétrole, une résine styrénique, une résine cyclopentadiénique ou une résine terpénique.

2. Film polypropylène biorienté à trois couches, constitué d'une couche de base contenant au moins 85 % en poids d'un homopolymère polypropylène et de deux couches de recouvrement, disposées sur les deux faces de la couche de base, **caractérisé en ce que** la fraction insoluble dans le n-heptane de l'homopolymère polypropylène de la couche de base présente un indice d'isotacticité de chaîne d'au moins 95%, mesuré au moyen de la spectroscopie RMN ¹³C et **en ce que** la couche de base contient 1 à 15 % en poids d'une résine hydrocarbonée, naturelle ou synthétique, ayant une masse moléculaire Mw (moyenne pondérale) allant de 300 à 2000 et un point de ramollissement de 70 à 170°C, la résine hydrocarbonée étant une résine de pétrole, une résine styrénique, une résine cyclopentadiénique ou une résine terpénique, à l'exception des films qui contiennent dans la couche de base 5 % en poids ou plus de 5 % en poids d'une résine terpénique ou d'une résine de pétrole éventuellement hydrogénée.

3. Film polypropylène biorienté, comprenant une couche de base contenant au moins 85% en poids d'un homopolymère polypropylène, **caractérisé en ce que** la fraction insoluble dans le n-heptane de l'homopolymère polypropylène de la couche de base présente un indice d'isotacticité de chaîne d'au moins 95%, mesuré au moyen de la spectroscopie RMN ¹³C et **en ce que** la couche de base contient 1 à 25 % en poids de pigments et 1 à 15 % en poids d'une résine hydrocarbonée, naturelle ou synthétique, ayant une masse moléculaire Mw (moyenne pondérale) allant de 300 à 2000 et un point de ramollissement de 70 à 170°C, la résine hydrocarbonée étant une résine de pétrole, une résine styrénique, une résine cyclopentadiénique ou une résine terpénique et le film présentant une structure à quatre couches, dont deux couches de recouvrement disposées sur les deux faces de la couche de base, ainsi qu'une couche intermédiaire.

4. Film polypropylène biorienté, comprenant une couche de base contenant au moins 85% en poids d'un homopolymère polypropylène, **caractérisé en ce que** la fraction insoluble dans le n-heptane de l'homopolymère polypropylène de la couche de base présente un indice d'isotacticité de chaîne d'au moins 95%, mesuré au moyen de la spectroscopie RMN ¹³C et **en ce que** la couche de base contient 1 à 15 % en poids d'une résine hydrocarbonée, naturelle ou synthétique, ayant une masse moléculaire Mw (moyenne pondérale) allant de 300 à 2000 et un point de ramollissement de 70 à 170°C, la résine hydrocarbonée étant une résine de pétrole, une résine styrénique, une résine cyclopentadiénique ou une résine terpénique et le film présentant deux couches de recouvrement ainsi que deux couches intermédiaires, disposées sur les deux faces de la couche de base, à l'exception des films dans lesquels les deux couches intermédiaires sont constituées d'un polypropylène hautement isotactique, ayant un indice d'isotacticité supérieur à 94%.

5. Film polypropylène selon l'une des revendications 1 à 4, **caractérisé en ce que** l'effet barrière à la vapeur d'eau (abréviation en allemand: WDD) satisfait à la formule : $WDD \leq \frac{C 1}{d 1 + D * X}$
dans laquelle d désigne l'épaisseur du film en µm, C = 22,5 g* µm/m² * d, D = 5 et X désigne la teneur relative en résines du film.

6. Film polypropylène selon l'une des revendications 1 à 5, **caractérisé en ce que** le module d'élasticité du film dans le sens longitudinal est supérieur à 2700 N/mm² et **en ce que** le module d'élasticité du film dans le sens transversal est supérieur à 3800 N/mm² (déterminés selon les normes DIN 53457, respectivement ASTM 882).

7. Film polypropylène selon l'une des revendications 1 à 6, **caractérisé en ce que** la résistance à la rupture dans le sens longitudinal est supérieure à 180 N/mm² et dans le sens transversal, supérieure à 250 N/mm² et **en ce que** l'allongement à la rupture dans le sens longitudinal est inférieur à 130 % et dans le sens transversal, supérieur à 60 % (déterminés selon la norme DIN 53455).

8. Film polypropylène selon l'une des revendications 1 à 7, **caractérisé en ce que** la couche de base contient un propylène dont la fraction insoluble dans le n-heptane présente un indice d'isotacticité de chaîne allant de 95,5 à 98 %, mesuré au moyen d'une spectroscopie RMN ¹³C.

9. Film polypropylène selon l'une des revendications 1 à 8, **caractérisé en ce que** la couche de base contient un polypropylène dont la rapport Mw/Mn est supérieur à 6, de préférence compris entre 7 et 15.

10. Procédé de fabrication d'un film polypropylène selon la revendication 1, **caractérisé en ce que**, dans le sens longitudinal, l'orientation est effectuée selon un rapport d'allongement longitudinal allant de 5:1 à 9:1 et, dans le sens transversal, selon un rapport d'allongement transversal allant de 5:1 à 10:1.

11. Utilisation du film de polypropylène selon l'une ou plusieurs des revendications 1 à 9 en tant que film d'emballage.

12. Utilisation du film de polypropylène selon l'une ou plusieurs des revendications 1 à 9 en tant que film de contre-collage.

13. Emballage contenant un film de polypropylène selon l'une des revendications 1 à 9.
